(19) Europäisches Patentamt
European Patent Office
Office européen des brevets

(11) EP 2 560 063 A1

(12) EUROPEAN PATENT APPLICATION

(43) Date of publication:
20.02.2013 Bulletin 2013/08

(51) Int Cl.:
G05F 1/56 (2006.01)          H02M 7/217 (2006.01)

(21) Application number: 11177561.5

(22) Date of filing: 15.08.2011

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: NXP B.V.
5656 AG Eindhoven (NL)

(72) Inventor: van den Broeke, Leendert
Redhill, Surrey RH1 1DL (GB)

(74) Representative: Hardingham, Christopher Mark
NXP Semiconductors
Intellectual Property and Licensing
Red Central
60 High Street
Redhill, Surrey RH1 1SH (GB)

(54) **Voltage regulator circuit and method**

(57)   The invention provides a voltage regulator circuit in which a linear voltage regulator supplies a regulated output voltage based on a rectified input voltage. The linear voltage regulator output is disabled for parts of the rectified voltage cycle, so that the voltage regulation is implemented only when the input voltage is within a predefined voltage range from the output voltage. This improves the efficiency.

FIG. 1

**Description**

This invention relates to a power supply, for example for providing a low power during a standby mode.

Several mains supplied electronic appliances contain a micro-controller that remains active at all times. For example fridges, coffee machines and intelligent lights that may contain a light sensor, motion detector or a respond to a remote control. As the device is powered at all time, low power consumption from the mains is important. This can be achieved by an efficient power supply and/or a low consumption by the micro-controller.

For many applications, it is a good solution to use a switching regulator to convert the mains voltage into a voltage of a few volts that is suited for the micro-controller.

Such a solution is power efficient but requires relatively expensive and large magnetic components for the energy conversion (Buck or Flyback inductor) and EMC filtering.

Alternatively, a capacitive supply can be used. This consists of a capacitor in series with the Mains input that delivers an alternating current to a rectifier/voltage clamp circuit. Although capacitive supplies are power efficient, the high-voltage series capacitor requires considerable physical space. In addition, for a given capacitor value, capacitive supplies leave no headroom for (temporarily) delivering an increased amount of output current. This headroom may be useful in various applications, for example in systems where the microcontroller has to perform some tasks in a burst mode.

The aim of the invention is to provide a low-cost, low-power and physically compact solution which can for example supply power to a micro controller and peripheral circuitry during standby.

According to the invention, there is provided a voltage regulator circuit, comprising:

a rectifier circuit providing a rectified voltage;
a linear voltage regulator, supplied from the rectified voltage and supplying a regulated output voltage;
a disabling circuit, for disabling the linear voltage regulator for parts of the rectified voltage cycle.

The rectifier (single or double-sided) converts a sinusoidal mains input voltage into a half or full rectified sine wave. The linear regulator derives the desired output voltage directly from this rectified sine wave, but only during part of input voltage, as a result of the disabling circuit. The disabling circuit can for example ensure that the regulation only takes place when the momentary input voltage is fairly close to the desired output voltage. In this way, losses can be significantly reduced.

A compact and low-cost implementation is thus feasible using a few discrete components. Alternatively, the solution can be integrated into an IC.

The regulator circuit of the invention is able to deliver an average output current for example of a few milliamps while input power from the mains is limited, for example to the order of 100mW.

This arrangement can be made cheaply and compactly, and is more power efficient than a conventional linear voltage regulator but is less expensive than a regulator based on an inductor.

The disabling circuit can comprise a circuit for implementing a disable function based on the level of a voltage derived from the rectified voltage. In this way, a voltage comparison function can be used to implement the disable function. For example, the disabling circuit can comprise a transistor which has a control voltage derived from the rectified voltage. The linear voltage regulator can comprise an output transistor, and the disabling circuit transistor can then be adapted to switch off the output transistor when it is turned on.

Alternatively, the disabling circuit can comprise an output switch at the output of the linear voltage regulator, and a control circuit for controlling the output switch in dependence on the voltage derived from the rectified voltage.

There are thus various ways to disable the operation of the linear voltage regulator.

The control circuit can comprise a comparator which compares a scaled version of the rectified voltage with a reference voltage.

In another implementation, the disabling circuit can comprise a timer circuit which is locked to the phase of the rectified voltage or the input signal to the voltage regulator circuit. In this way, the same timing instants can be derived (at which the input exceeds a threshold) but based on a timing circuit rather than a voltage measurement circuit.

The circuit preferably has an output buffer capacitor for smoothing the output voltage, to take account of the disable switching function.

The linear voltage regulator can comprise an LDO, and it can have a reference voltage generator in the form of a voltage shunt regulator.

The linear voltage regulator can be implemented based on a bipolar output transistor, a MOS output transistor or a Darlington output stage.

The invention also provides a method of controlling a voltage regulator, comprising:

providing a rectified voltage using a rectifier circuit;
supplying a regulated output voltage using a linear voltage regulator, supplied from the rectified voltage; and

disabling the linear voltage regulator for parts of the rectified voltage cycle.

Examples of the invention will now be described in detail with reference to the accompanying drawings, in which:

Figure 1 shows an example of the principle of operation of a gated linear regulator supply of the invention;
Figure 2 shows the theoretical power efficiency of the gated linear regulator of Figure 1 as a function of voltage for 120Vrms input and 3V output;
Figure 3 shows the ratio between peak current and output current as function of voltage for 120Vrms input and 3V output;
Figure 4 shows a first detailed circuit example of a 3V supply according to the invention;
Figure 5 shows waveforms of the signals in the example of a 3V supply according to the invention;
Figure 6 shows a second detailed circuit example of a 3V supply according to the invention;
Figure 7 shows the principle of operation of a gated linear regulator supply of the invention in more general form than Figure 1.

The invention provides a voltage regulator circuit in which a linear voltage regulator supplies a regulated output voltage based on a rectified input voltage. The linear voltage regulator output is disabled for parts of the rectified voltage cycle, so that the voltage regulation is implemented only when the input voltage is within a predefined voltage range from the output voltage. This improves the efficiency.

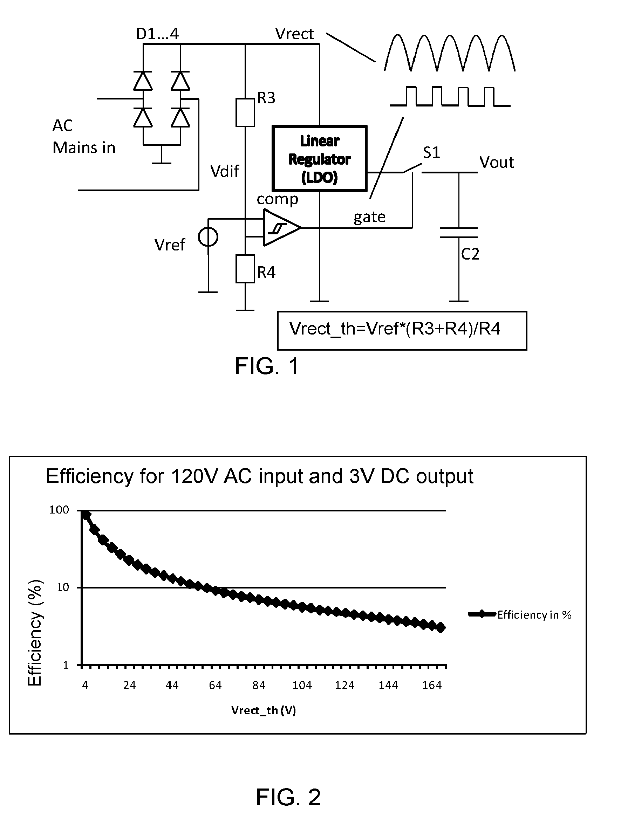

Figure 1 shows one example of the principle of operation of a gated linear regulator supply of the invention.

The diodes D1...4 define a conventional bridge rectifier and rectify the mains input voltage. For the explanation of the principle, a double-phase rectifier is assumed, but a single-phase rectifier is also possible.

The rectified sine wave voltage Vrect is supplied to a linear regulator, for example an LDO ("Low Drop Out") regulator. The regulator regulates the current from Vrect to the output such that the output voltage is at the target voltage level of, for example, 3V.

A linear regulator is a voltage regulator based on an active device (typically a transistor) operating in its linear region. The transistor is operated as a variable current source, continuously adjusting the current value to maintain a constant output voltage. It is very inefficient compared to a switched-mode power supply, since it sheds the difference voltage by dissipating heat.

A low-dropout or LDO regulator is a DC linear voltage regulator which can operate with a very small input-output differential voltage. Typically, the LDO comprises a power FET and a feedback mechanism (which may be implemented as an error amplifier). The feedback mechanism responds to the output, so that if the output voltage rises too high, the drive to the power FET changes to maintain a constant output voltage.

The internal components of the LDO are not shown in Figure 1, as they are entirely conventional.

A conventional power supply comprises the rectifier and the LDO. The additional components shown in Figure 1 (the output switch, resistive divider, comparator and output capacitor) are described below, and these together implement the circuit of the invention.

Reverse current from the output capacitor is prevented from flowing back to the input of the linear regulator and/or mains during the time that the rectified voltage is lower than the output voltage. This is typically in the middle of the gating (on) time. In practical implementations, this will be assured by the mains rectifier.

Low-dropout regulators utilize open collector or open drain topology. This enables transistor saturation, which limits the voltage drop to only the saturation voltage.

The power efficiency of the linear regulator (LDO) is very poor because the average input voltage is high compared to the output voltage. The efficiency *E* for the linear regulator equals:

$$E = \frac{P_{out}}{P_{in}} \cdot 100\% = \frac{V_{out} \cdot I_{out}}{V_{in_{eff}} \cdot I_{out}} \cdot 100\%$$

For a mains voltage of 120Vrms, the effective rectified voltage is about 108V (taking the average while the voltage is high enough to have a current flowing):

$$V_{in_{eff}} = V_{in_{rms}} \cdot \frac{2 \cdot \sqrt{2}}{\pi}$$

This rectified voltage is not buffered in a capacitor. Otherwise, the effective input voltage would be even a factor of $\frac{\pi}{2}$ higher:

$$Vin_{eff} = Vin_{rms} \cdot \sqrt{2}$$

And the efficiency accordingly lower.

For 120Vrms input, a rectifier without buffer capacitor and 3V output, the theoretical efficiency (so not considering any biasing current) is only 2.8%.

The invention provides a significant improvement in power efficiency by gating the regulator to only conduct current from Vrect to Vout when the momentary value of the rectified input voltage Vrect is lower than a certain threshold voltage Vrect_th and higher than the output voltage Vout. This will reduce the average input voltage to:

$$Vin_{eff} = \frac{-\cos\left(\text{asin}\left(\frac{Vrect_{th}}{Vin_{rms} \cdot \sqrt{2}}\right)\right) + \cos\left(\text{asin}\left(\frac{Vout}{Vin_{rms} \cdot \sqrt{2}}\right)\right)}{\text{asin}\left(\frac{Vrect_{th}}{Vin_{rms} \cdot \sqrt{2}}\right) - \text{asin}\left(\frac{Vout}{Vin_{rms} \cdot \sqrt{2}}\right)} \cdot Vin_{rms} \cdot \sqrt{2}$$

This gating arrangement is shown in Figure 1.

A switch S1 is provided at the output of the LDO, and it is gated by a signal derived by a comparator "comp". This compares a scaled version of the rectified input voltage Vrect with a reference voltage Vref. For this purpose, there is a resistive divider R3,R4, the comparator comp and a reference voltage source Vref.

The comparator defines a rectifier threshold Vrect_th:

$$Vrect\_th = Vref*(R3+R4)/R4$$

The efficiency calculated as function of Vrect_th for 120Vrms input and 3V output is plotted in Figure 2.

When Vrect_th equals the peak input voltage, the efficiency is the same as a normal linear regulator, because the output switch S1 remains closed at all times. When Vrect_th equals the output voltage (which is not a circuit arrangement that will operate in practice), the efficiency becomes 100%, because the LDO functions as a closed switch with no voltage drop.

The output switch will modulate the connection to the output as a function of the instantaneous value of the rectified mains input. This can be seen in the waveforms in Figure 1, where the signal "gate" is high only for the low part of the mains rectified voltage "Vrect". The higher parts of the mains rectified voltage exceed Vrect_th so the output switch is open.

As the current is only flowing during part of the mains cycle, the peak current will be (significantly) higher than the average output current lout:

$$\frac{Ipeak}{Iout} = \frac{\frac{\pi}{2}}{\text{asin}\left(\frac{Vrect_{th}}{Vin_{rms} \cdot \sqrt{2}}\right) - \text{asin}\left(\frac{Vout}{Vin_{rms} \cdot \sqrt{2}}\right)}$$

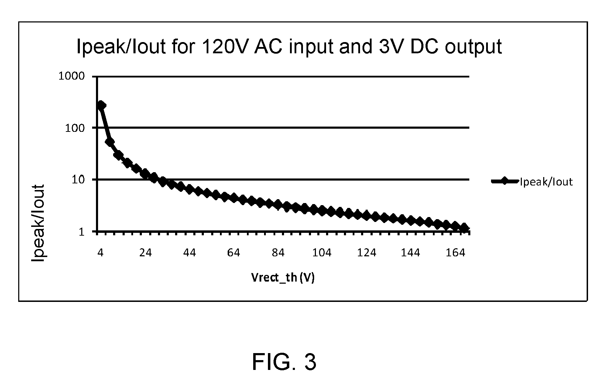

Figure 3 shows the ratio between peak current and output current as function of the voltage Vrect_th for 120Vrms input and 3V output.

In order to provide output current during the complete cycle of the mains (continuing when the output switch S1 is open), the output buffer capacitor C2 is added.

In order to prevent glitches, a hysteresis function is added to the comparator. Alternatively, the comparator gain may be limited or low-pass filtering may be added.

The closer Vrect_th is set to the output voltage Vout, the better the efficiency. However, a disadvantage of having Vrect_th close to Vout is that the circuit will conduct high peak currents. They may cause a high level of harmonics in the mains current and require more expensive components that can handle the high peak current.

In practice, a compromise must be found between efficiency on the one hand and harmonics performance and cost on the other hand.

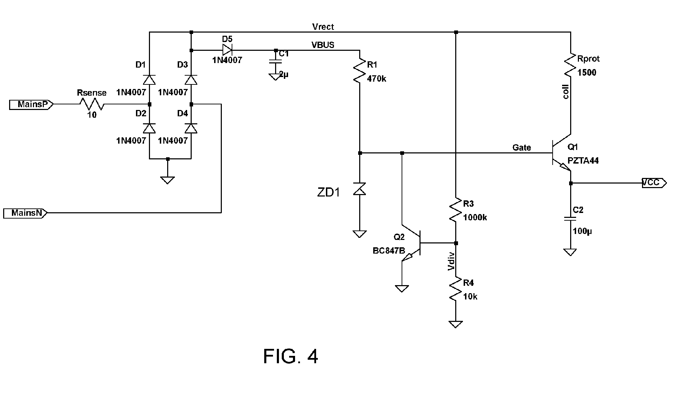

Figure 4 shows a first example of an embodiment of the invention using discrete components.

The linear regulator function is implemented by a single high voltage transistor Q1 that regulates its collector-emitter current depending on the drop of the output voltage VCC compared to the reference voltage Vgate that is being supplied to its base. The LDO feedback control mechanism is thus implemented by the transistor Q1 itself.

The reference gate voltage for the LDO operation is defined by a zener diode ZD1 which is powered by the rectified mains voltage Vrect. The reference voltage may be 3.0V for example. The supply voltage Vbus for the reference circuit is formed from the rectified mains voltage Vrect by a diode D5 and smoothing capacitor C1, and this bus feeds the zener diode ZD1 through a resistor R1. Thus, resistor R1 is supplied from a rectified and buffered voltage. This voltage bus is already available in many applications. The gate reference voltage is defined as the zener diode threshold voltage.

The voltage divider used for the output switch circuit is shown as R3 and R4, as in Figure 1, and this provides the divider voltage Vdiv. The comparator of Figure 1 is implemented by a transistor Q2.. Q2 will start conducting when Vdiv exceeds the base-emitter junction voltage, which serves as reference voltage Vref.

When the transistor Q2 is turned on, it pulls down the gate voltage and thus turns off the main LDO transistor Q1. Thus, it can be seen that the transistor Q1 functions both as voltage reference and comparator, comparing the momentary value of Vdiv with the junction voltage and disabling the LDO function by pulling low the signal Vgate.

The gate signal thus performs two functions:

1. When the linear regulator is intended to be active (Vrect is below Vrect_th), it provides a reference voltage for the normal LDO operation.
2. When the regulator is intended to be off (when Vrect is high), Vgate will be pulled low to disable the output current.

A collector resistor Rprot between Vrect and the transistor collector serves to limit the peak current during mains voltage surges and may be also be used to take over part of the power dissipation from the transistor.

Although in this example a bipolar transistor has been used for Q1, it is also possible to use a MOS transistor. A high-voltage MOS transistor is more expensive than a high-voltage bipolar transistor. In addition, a MOS transistor adds an inaccurate and temperature-dependent threshold voltage.

In the embodiment of Figure 4, the reference voltage for the regulator function is derived from a zener diode ZD1 (a shunt regulator) that is biased from a more or less constant current supplied via a resistor R1. For optimal efficiency, the biasing current must be minimized. The minimum amount of bias current depends on the required output current, gating time, current-gain of transistor Q1 and the biasing current required for the voltage reference.

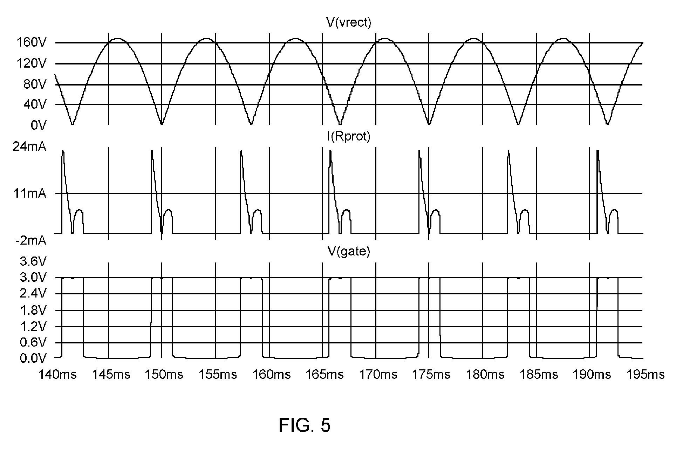

Figure 5 shows the waveforms of the rectified voltage (upper trace), the LDO current (which equals current through protection resistor Rprot, middle trace) and the gate signal (lower trace). Note that, unlike the assumption taken in calculating the converter efficiency, the current during the gating time is not constant. This will slightly change the efficiency figure.

As can be seen, the transistor Q1 only conducts for short bursts at low values of the rectified mains voltage.

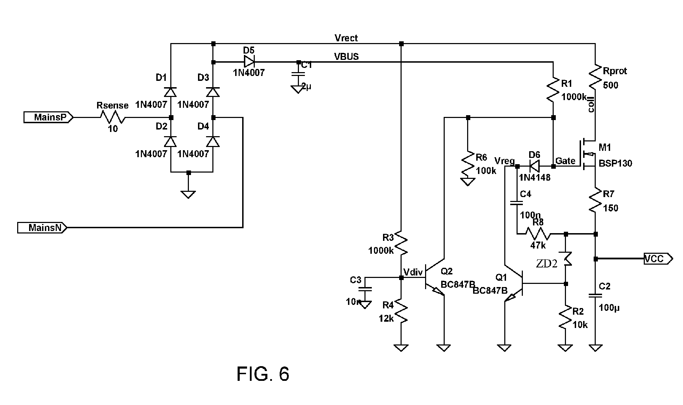

A second embodiment shown in Figure 6 requires a few more components but is more efficient because it uses lower biasing current.

Rather than a bipolar transistor and a voltage reference, the linear regulator now consists of a MOS transistor output stage based on a MOS transistor M1, an error amplifier consisting of bipolar transistor Q1, resistors R1 and R6 and an RC loop filter consisting of C4 and R8.

The advantage of using a MOS transistor over a bipolar transistor is that it does not need a DC gate current. This helps in reducing the biasing current. A disadvantage is that, due to the spread in gate-source threshold voltage, the output voltage can only be accurately fixed using a feedback loop and error amplifier.

The output voltage VCC is used to derive the reference voltage for the LDO function. The reference voltage is a fixed step below the output voltage VCC, for example 2.7V below. The output voltage drives a zener diode ZD2 through a resistor R2, and this derives the reference voltage which is applied to the base of the transistor Q1. The reference voltage remains during the complete mains cycle. The zener/shunt regulator ZD2 (for example components LM385 or AP431) determines the set point of the LDO, and resistor R2 adjusts the current flowing though the zener/shunt regulator.

The transistor Q1 is thus turned on in dependence on the output voltage, and it controls the gate voltage of the transistor M1, by draining current from the gate. The resistor R1 provides the basic biasing current for driving the output stage and the resistor R6 is added to set the maximum gate voltage (to prevent damaging M1) and also limit the peak output current to a safe value.

A resistor R7 between the transistor M1 and the output VCC gives a fixed and limited voltage-current gain of the MOS transistor output stage.

The diode D6 provides the regulator with a gate function without disturbing the loop filter.

The disabling function of the invention is implemented in Figure 6 in the same way as in Figure 4, in that a divided voltage Vdiv is derived from the rectified signal Vrect by a voltage divider R3,R4, which is used to control a transistor Q2 for pulling down the base/gate of the LDO output transistor when Vdiv exceeds the base-emitter junction voltage Vref.

According to simulation, the circuit of Figure 6 consumes about 100mW for 3V and 2mA average output current. This implies 6% efficiency, which is considerably more than the efficiency from a linear regulator that was calculated above to be 2.8%.

The circuit of Figure 6 is provided simply to show that a MOS implementation is equally possible, with the LDO function based on a feedback loop using the output voltage. The LDO may also comprise a Darlington output stage.

There are many different possible implementations of the LDO circuit functionality as well as the disabling circuit functionality. The invention is based on the recognition that gating the operation of the LDO in dependence on the input voltage cycle can be used to improve efficiency of the circuit.

For example, Figure 1 shows the principle of the invention in which the gating of the LDO is implemented by a series switch at the output. In the two detailed embodiments discussed above, the gating is by modulating the base/gate voltage of the LDO regulator transistor. Other solutions are also possible, such as:

Gating by inserting a series switch at the LDO input;
Gating by enabling/disabling an enable pin of the regulator;
Gating by modulating the regulator reference voltage;
Gating by switching the ground pin of the regulator to ground or have it floating.

Figure 1 also shows the gating timing of the LDO implemented by a voltage comparison on the rectified mains voltage. Alternative solutions are possible, such as gating timing derived from a timer that is synchronized to the mains period.

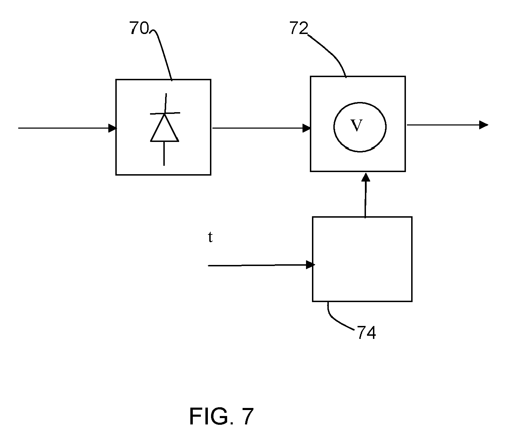

A more general schematic of the principle of the invention is shown in Figure 7. The rectifier is shown as 70 which receives an ac input voltage, and supplies a linear voltage regulator 72 as its output. A disabling circuit 74 interrupts the operation of the linear voltage regulator 72 based on a timing signal t. As outlined above, the disabling can be based on controlling the operation of existing components of the linear voltage regulator 72, or based on the use of additional components external to the LDO, such as an input switch or output switch. The timing signal t can be derived from a voltage comparison or from a timing circuit which is synchronised to the cycle of the ac input voltage.

The regulator can have multiple outputs, arranged as multiple parallel regulators. Multiple regulators can also be provided in series, and this can be used to reduce the output ripple.

The regulator preferably comprises an LDO, but the invention can be applied to linear voltage regulators generally to improve their efficiency.

The regulator of the invention is of most interest when cost is to be kept low and a certain amount of standby power is required. This is for example the case in 'intelligent' light bulbs that contain a micro-controller and/or transceiver for remote control or monitoring.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage. Any reference signs in the claims should not be construed as limiting the scope.

**Claims**

1. A voltage regulator circuit, comprising:

a rectifier circuit (D1-D4) providing a rectified voltage (Vrect);
a linear voltage regulator (LDO), supplied from the rectified voltage and supplying a regulated output voltage;
a disabling circuit (R3,R4, comp, S1), for disabling the linear voltage regulator for parts of the rectified voltage cycle.

2. A circuit as claimed in claim 1, wherein the disabling circuit (R3,R4, comp, S1) comprises:

    a circuit for implementing a disable function based on the level of a voltage derived from the rectified voltage (Vrect).

3. A circuit as claimed in claim 2, wherein the disabling circuit comprises a transistor (Q2) which has a control voltage derived from the rectified voltage.

4. A circuit as claimed in claim 3, wherein the linear voltage regulator (LDO) comprises an output transistor (Q1), and the disabling circuit transistor (Q2) is adapted to switch off the output transistor (Q1) when it is turned on.

5. A circuit as claimed in claim 2, wherein the disabling circuit comprises an output switch (S1) at the output of the linear voltage regulator, and a control circuit (R3,R4, comp) for controlling the output switch (S1) in dependence on the voltage derived from the rectified voltage.

6. A circuit as claimed in claim 5, wherein the control circuit comprises a comparator (comp) which compares a scaled version of the rectified voltage (Vrect) with a reference voltage (Vref).

7. A circuit as claimed in claim 6, wherein the comparator (comp) has a hysteresis function.

8. A circuit as claimed in claim 1, wherein the disabling circuit comprises a timer circuit which is locked to the phase of the rectified voltage or the input signal to the voltage regulator circuit.

9. A circuit as claimed in any preceding claim, comprising an output buffer capacitor (C2).

10. A circuit as claimed in any preceding claim, wherein the linear voltage regulator (LDO) comprises an LDO.

11. A circuit as claimed in any preceding claim, wherein the LDO comprises a reference voltage generator (ZD1), which comprises a voltage shunt regulator.

12. A circuit as claimed in any preceding claim, wherein the linear voltage regulator comprises a bipolar output transistor, a MOS transistor or a Darlington output stage.

13. A circuit as claimed in any preceding claim, integrated into an IC.

14. A method of controlling a voltage regulator, comprising:

    providing a rectified voltage (Vrect) using a rectifier circuit (D1-D4);
    supplying a regulated output voltage (Vrect) using a linear voltage regulator (LDO), supplied from the rectified voltage (Vrect); and
    disabling the linear voltage regulator for parts of the rectified voltage cycle.

15. A method as claimed in claim 14, wherein the disabling comprises implementing a disable function based on the level of a voltage derived from the rectified voltage.

Vrect_th=Vref*(R3+R4)/R4

FIG. 1

Efficiency for 120V AC input and 3V DC output

FIG. 2

Ipeak/Iout for 120V AC input and 3V DC output

FIG. 3

FIG. 4

FIG. 5

FIG. 6

70

72

t

74

FIG. 7

Europäisches
Patentamt

European
Patent Office

Office européen
des brevets

## EUROPEAN SEARCH REPORT

Application Number

EP 11 17 7561

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 458 699 A (DEEPSTREAM TECHNOLOGIES LTD [GB]) 30 September 2009 (2009-09-30) * the whole document * | 1-15 | INV. G05F1/56 H02M7/217 |
| A | US 2009/066310 A1 (KIM MYUNG JIN [KR]) 12 March 2009 (2009-03-12) * abstract; figure 6 * | 4 | |
| A | US 2006/108993 A1 (CHIEN HUNG J [TW] ET AL CHIEN HUNG JEN [TW] ET AL) 25 May 2006 (2006-05-25) * abstract; figure 2 * | 4 | |
| | | | TECHNICAL FIELDS SEARCHED (IPC) |
| | | | G05F H02M |

The present search report has been drawn up for all claims

| Place of search | Date of completion of the search | Examiner |
|---|---|---|
| The Hague | 28 February 2012 | Arias Pérez, Jagoba |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 11 17 7561

This annex lists the patent family members relating to the patent documents cited in the above-mentioned European search report.
The members are as contained in the European Patent Office EDP file on
The European Patent Office is in no way liable for these particulars which are merely given for the purpose of information.

28-02-2012

| Patent document cited in search report | | Publication date | Patent family member(s) | | Publication date |
|---|---|---|---|---|---|
| GB 2458699 | A | 30-09-2009 | EP 2272160 A2 | | 12-01-2011 |
| | | | GB 2458699 A | | 30-09-2009 |
| | | | WO 2009118535 A2 | | 01-10-2009 |
| US 2009066310 | A1 | 12-03-2009 | KR 20090027106 A | | 16-03-2009 |
| | | | US 2009066310 A1 | | 12-03-2009 |
| US 2006108993 | A1 | 25-05-2006 | TW I263124 B | | 01-10-2006 |
| | | | US 2006108993 A1 | | 25-05-2006 |

EPO FORM P0459

For more details about this annex : see Official Journal of the European Patent Office, No. 12/82